# EUROPÄISCHE PATENTANMELDUNG

(11) **EP 1 176 497 A2**
(43) Veröffentlichungstag der Anmeldung: **30.01.2002**
(21) Anmeldenummer: 01115394.7
(22) Anmeldetag: 26.06.2001
(51) Int. Cl.: G06F 3/023, G06F 1/16

(54) **Ein-/Ausgabegerät für eine Datenverarbeitungsvorrichtung**

(30) Priorität: 24.07.2000 DE 10035964
(71) Anmelder: SIEMENS AKTIENGESELLSCHAFT, 80333 München (DE)
(72) Erfinder: Bilke, Volkmar, 33154 Salzkotten (DE)

(57) **Zusammenfassung**

Die Erfindung betrifft ein Ein- und Ausgabegerät (1) mit zumindest einem Display (2) und einer Tastatur (3) sowie optional weiteren Ein- und Ausgabeelementen wie einem Mikrofon (5), einem Lautsprecher (6), einer Kamera (8), Einrichtungen zum Ankoppeln externer Geräte und/oder einem Zeigegerät (4). Es ist tragbar ausgebildet und kann über eine Luftschnittstelle (10) drahtlos auf die Verarbeitungskapazität bzw. Rechenleistung einer stationären Datenverarbeitungsvorrichtung (7), beispielsweise eines PCs, und deren Komponenten zugreifen.

## Beschreibung

Die vorliegende Erfindung betrifft ein Ein- und Ausgabegerät für eine stationäre Datenverarbeitungsvorrichtung.

In vielen privaten Haushalten werden als typische kostengünstige Datenverarbeitungsvorrichtungen sog. Personalcomputer-kurz PC - als Arbeits-, Spiel- und Kommunikationsmedium benutzt. Der PC ist mit seinen Komponenten, wie zum Beispiel Drucker oder Internetanschluss, fest an einer Stelle im Haushalt installiert, häufig in einem abgelegenen Raum oder gar im Keller. Die Nutzung ist daher auf diese Stelle im Haushalt eingeschränkt.

Eine ortsungebundene und mobile Nutzung ermöglichen dagegen tragbare Computer, wie z.B. sogenannte 'Laptops' oder 'Handhelds', die jedoch gegenüber einem PC in der Regel nur eine eingeschränkte Rechenleistung zur Verfügung stellen. Da die Kosten für einen Laptop mit vergleichbarer Verarbeitungsleistung deutlich höher liegen als für einen stationären PC, werden jedenfalls in privaten Haushalten meist nur stationäre PCs verwendet.

In Anbetracht der vielfältigen Einsatzmöglichkeiten einer stationären Datenverarbeitungsvorrichtung in einem privaten Haushalt wäre jedoch eine ortsungebundene bzw. mobile Nutzung in möglichst dem gesamten Bereich des privaten Haushaltes wünschenswert.

Der Erfindung liegt daher die Aufgabe zugrunde, eine Möglichkeit zu schaffen, mittels der eine stationäre Datenverarbeitungsvorrichtung kostengünstig und ortsungebunden nutzbar ist.

Die Aufgabe wird ausgehend vom Oberbegriff des Patentanspruchs 1 durch dessen kennzeichnende Merkmale gelöst.

Der Erfindung liegt der Gedanke zugrunde, ein tragbares Einund Ausgabegerät zu schaffen, mit dem der Nutzer auf die Rechenleistung einer stationären Datenverarbeitungsvorrichtung, wie beispielsweise einem stationären Personal Computer, und deren Komponenten zugreifen kann, ohne in dem tragbaren Ein- und Ausgabegerät selbst Maßnahmen für eine größere Verarbeitungskapezität bzw. Rechenleistung vorsehen zu müssen.

Vorteilhafte Weiterbildungen der Erfindung sind in den Unteransprüchen angegeben.

Das tragbare Ein- und Ausgabegerät kann demnach in komfortableren Versionen auch ein Mikrofon, einen Lautsprecher, eine Kamera, Anschlußbuchsen für externe Audio- und Videogeräte zum Ein- und Ausgaben von Video- und Audiosignalen und/oder ein Zeigegerät, eine Maussteuerung oder dgl. aufweisen.

Ein erfindungsgemäßes tragbares Ein- und Ausgabegerät kann in einfacher Weise in eine bestehende stationäre Datenverarbeitungsvorrichtung integriert werden, nämlich durch einfaches Hinzufügen einer Luftschnittstelle und einer draht- bzw. kabellosen Datenübertragungsstrecke, z.B. unter Nutzung eines Infrarot-, eines Ultraschall- und/oder eines Funkkanals. Das tragbare Ein- und Ausgabegerät erlaubt die Nutzung aller an der stationären Datenverarbeitungsvorrichtung angeschlossenen Endgeräte und Interfaces - z.B. eines Internetanschlusses-sowie der auf der stationären Datenverarbeitungsvorrichtung implementierten Programme auf mobile Weise in dem gesamten Einzugsbereich der Luftschnittstelle.

Die Nutzung, also der Zugriff auf die stationäre Datenverarbeitungsvorrichtung, kann daher an dem vom Nutzer gewünschten Ort innerhalb eines Haushalts erfolgen, wie z. B. Internet im Wohnzimmer, Kochbuch in der Küche, Ratgeber Garten im Grünen, Musik (MPEG3) an der Stereoanlage usw. Der Einzugsbereich kann im gegebenen Fall auch eine Terrasse, einen Balkon oder einen Garten umfassen. Die stationäre Datenverarbeitungsvorrichtung, wie insbesondere ein stationärer PC bleibt weiterhin als Arbeitsgerät verfügbar an dem auch alle Hardware- und Software-Erweiterungen und -Änderungen durchgeführt werden können.

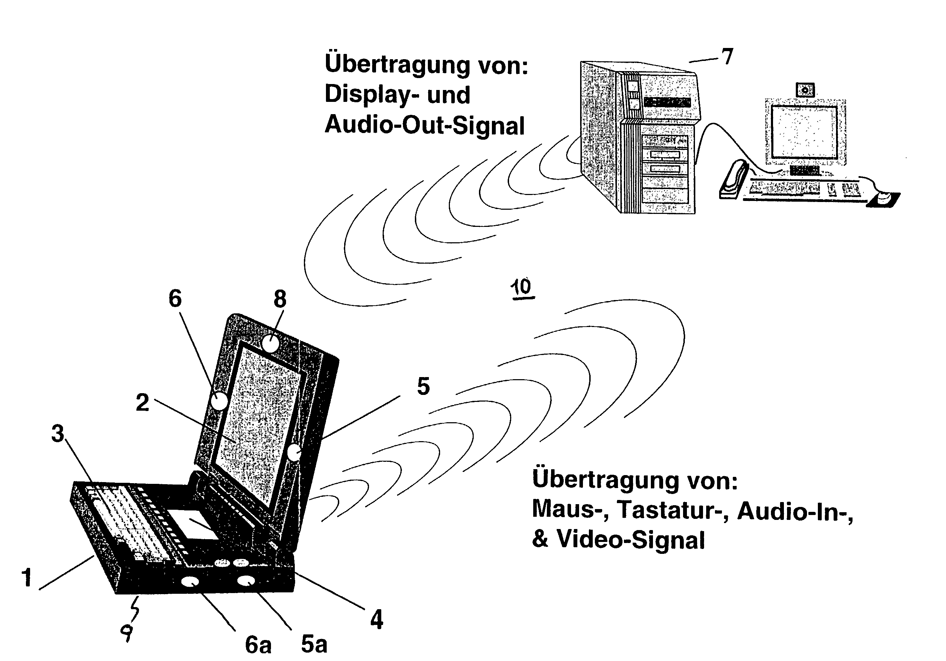

Ein Ausführungsbeispiel der Erfindung wird im folgenden anhand der Zeichnung erläutert.

In der einzigen Figur der Zeichnung ist ein Beispiel für den Aufbau und die Zuordnung eines erfindungsgemäßen tragbaren Ein- und Ausgabegeräts dargestellt.

Das Ein- und Ausgabegerät 1 gemäß der Erfindung weist in einem tragbaren Gehäuse 9 ein Display 2 und eine Tastatur 3, hier eine Standardtastatur, als Mindestausrüstung auf. Das dargestellte Ein- und Ausgabegerät 1 enthält darüber hinaus ein Zeigegerät 4, ein Mikrofon 5 (Mono oder Stereo), einen Lautsprecher 6 (Mono oder Stereo), eine Kamera 8 (Analog oder Digital) sowie Anschlussbuchsen 5a, 6a für den Anschluss von externen Audio- bzw. Videogeräten. Ferner können Anschlußmöglichkeiten für (externe) Scanner, Drucker, USB-Schnittstellen o. dgl. vorgesehen sein. Über eine Luftschnittstelle 10 wird eine Datenübertragungs-Verbindung zwischen dem tragbaren Ein- und Ausgabegerät 1 und einer stationären Datenverarbeitungsvorrichtung 7, insbesondere einem Personalcomputer (PC), hergestellt. Die vom tragbaren Ein- und Ausgabegerät 1 an die stationäre Datenverarbeitungsvorrichtung 7 über die hier durch eine funk-elektrische Übertragungsstrecke gebildete Luftschnittstelle 10 gesendeten Signale beinhalten Steuerfunktionen und Dateneingaben, die über die Tastatur 3, das Zeigegerät 4, ggf. auch einer nicht dargestellten Maussteuerung, das Mikrofon 5, die Kamera 8 oder die Audio/Video-Eingabeanschlussbuchse 5a eingegeben wurden. Über das Display 2, den Lautsprecher 6 und die Audio/Video-Ausgabeanschlussbuchse 6a werden die von der stationären Datenverarbeitungsvorrichtung 7 empfangenen Datensignale, Bildsignale bzw. Audiosignale ausgegeben.

Das tragbare Ein- und Ausgabegerät 1 dient somit nur der Ein- bzw. Ausgabe von Daten, Informationen und Steuerfunktionen in die bzw. aus der stationären Datenverarbeitungsvorrichtung 7. Die Rechenleistung wird ausschließlich von der stationären Datenverarbeitungsvorrichtung 7 erbracht, weshalb das tragbare Ein- und Ausgabegerät 1 sehr kompakt ausgebildet und kostengünstig hergestellt werden kann. Als Luftschnittstelle 10 können auch andere Übertragungsstrecken bzw. -kanäle verwendet werden, über die draht- bzw. kabellos Signale übertragen werden können, wie Infrarot- oder Ultraschall-Übertragungsstrecken.

Die Tastatur 3 kann auch sehr einfach ausgebildet sein wie es beispeilsweise bei Telefonen üblich ist. Dann ist allerdings der zeitliche Aufwand, um mit der stationären Datenverarbeitungsvorrichtung 7 in Verbindung zu treten, erhöht. Es ist daher zweckmäßig, eine Standardtastatur zu verwenden. In gleicher Weise kann es genügen, das Display 2 mit sehr geringen Abmessungen auszubilden, wobei dann allerdings der Lesevorgang umständlicher und zeitaufwendiger ist.

Eine weitere vorteilhafte Anwendung ergibt sich, wenn Geräte und Systeme im privaten Haushaltsbereich über die stationäre Datenverarbeitungsvorrichtung 7 gesteuert werden können (z.B. mit HES, Home Electronic System, auf der Basis des Installationsbus instabus EIB). Auch hier ist das erfindungsgemäß tragbare Ein- und Ausgabegerät dort integrierbar. Sofern solche Haushaltsgeräte und -systeme im privaten Haushaltsbereich eine Zweiwege-Kommunikationsverbindung mit der stationären Datenverarbeitungsvorrichtung 7 aufweisen, kann die Ankopplung des Ein- und Ausgabegerätes 1 dort sogar körperlich erfolgen.

Der Einsatz des erfindungsgemäß tragbaren Ein- und Ausgabegerätes ist nicht auf den privaten Bereich beschränkt. Es kann überall dort vorteilhaft eingesetzt werden, wo zusätzlich zu einer bereits vorhandenen stationären Datenverarbeitungsvorrichtung wie einem PC eine ortsungebundene Daten- und Informationsübertragung erwünscht ist.

## Patentansprüche

1. Ein- und Ausgabegerät für eine Datenverarbeitungsvorrichtung (7),
**dadurch gekennzeichnet,**
**dass** das Ein- und Ausgabegerät (1) von der Datenverarbeitungsvorrichtung (7) getrennt und tragbar ausgebildet ist und über eine Luftschnittstelle (10) auf die Datenverarbeitungsvorrichtung (7) zugreifen kann,
**dass** das Ein- und Ausgabegerät (1) zumindest eine Eingabevorrichtung (3) zur Eingabe von über die Luftschnittstelle (10) zu übertragenden Informationen und zumindest eine Ausgabevorrichtung (2) zur Ausgabe von über die Luftschnittstelle (10) empfangenen Informationen aufweist, und
**dass** eine interne Verarbeitungskapazität des Ein- und Ausgabegeräts (1) nur für eine Ein- und Ausgabe von Informationen am Ein- und Ausgabegerät (1) und für eine Informationsübermittlung mit der Datenverarbeitungseinrichtung (7) ausgelegt ist.

2. Ein- und Ausgabegerät (1) nach Anspruch 1,
**dadurch gekennzeichnet,**
**dass** die Datenverarbeitungsvorrichtung (7) ein Personal Computer ist.

3. Ein- und Ausgabegerät (1) nach einem der vorhergehenden Ansprüche,
**dadurch gekennzeichnet,**
**dass** die Eingabevorrichtung (3) eine Tastatur und die Ausgabevorrichtung (2) ein Display ist.

4. Ein- und Ausgabegerät (1) nach einem der vorhergehenden Ansprüche,
**dadurch gekennzeichnet,**
**dass** ferner ein Mikrofon (5) und ein Lautsprecher (6) zum Ein- und Ausgeben von Sprach-, Ton- oder Audiosignalen vorgesehen sind.

5. Ein- und Ausgabegerät (1) nach einem der vorhergehenden Ansprüche,
**dadurch gekennzeichnet,**
**dass** ferner eine Kamera (8) zum Eingeben von Bildsignalen vorgesehen ist.

6. Ein- und Ausgabegerät (1) nach einem der vorhergehenden Ansprüche,
**dadurch gekennzeichnet,**
**dass** ferner eine Einrichtung (5a, 6a) zum Ein- und Ausgeben von Audio- und Videosignalen von bzw. an externe Audio- und Videogeräte vorgesehen sind.

7. Ein- und Ausgabegerät (1) nach einem der vorhergehenden Ansprüche,
**dadurch gekennzeichnet,**
**dass** ferner ein Zeigegerät (4) wie eine Maussteuerung oder dgl. vorgesehen ist.

8. Ein- und Ausgabegerät (1) nach einem der vorhergehenden Ansprüche,
**dadurch gekennzeichnet,**
**dass** die Luftschnittstelle (10) durch eine Infrarot-Übertragungsstrecke, eine Ultraschall-Übertragungsstrecke oder eine funkelektrische Übertragungsstrecke gebildet ist.
